# EUROPEAN PATENT SPECIFICATION

(11) **EP 1 701 242 B1**
(45) Date of publication and mention of the grant of the patent: **21.01.2009**
(21) Application number: 05251370.2
(22) Date of filing: 08.03.2005
(51) Int. Cl.: G06F 3/02

(54) **Handheld electronic device with word correction facility**
Tragbares elektronisches Gerät mit Wort-Korrekturfähigkeit
Dispositif électronique portatif ayant une fonction pour correction de mots

(43) Date of publication of application: 13.09.2006
(73) Proprietor: Research In Motion Limited, Waterloo, Ontario N2L 3W8 (CA)
(72) Inventor: Pathiyal, Krishna, Waterloo, Ontario N2V 2R6 (CA); Griffin, Jason T., Kitchener, Ontario N2P 2L3 (CA)
(74) Representative: Roberts, Alison Christine

(56) References cited:
- EP-A- 1 031 914
- WO-A-98/33111

## Description

### BACKGROUND OF THE INVENTION

### Field of the Invention

The invention relates generally to electronic devices employing a text disambiguation function, and, more particularly, to a handheld electronic device having improved word correction capabilities. The invention also relates to a method of quickly and easily correcting a word being input into a handheld electronic device that employs a text disambiguation function.

### Background Information

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

Such handheld electronic devices are generally intended to be portable, and thus are of a relatively compact configuration in which keys and other input structures often perform multiple functions under certain circumstances or may otherwise have multiple aspects or features assigned thereto. With advances in technology, handheld electronic devices are built to have progressively smaller form factors yet have progressively greater numbers of applications and features resident thereon. As a practical matter, the keys of a keypad can only be reduced to a certain small size before the keys become relatively unusable. In order to enable text entry, however, a keypad must be capable of entering all twenty-six letters of the Roman alphabet, for instance, as well as appropriate punctuation and other symbols.

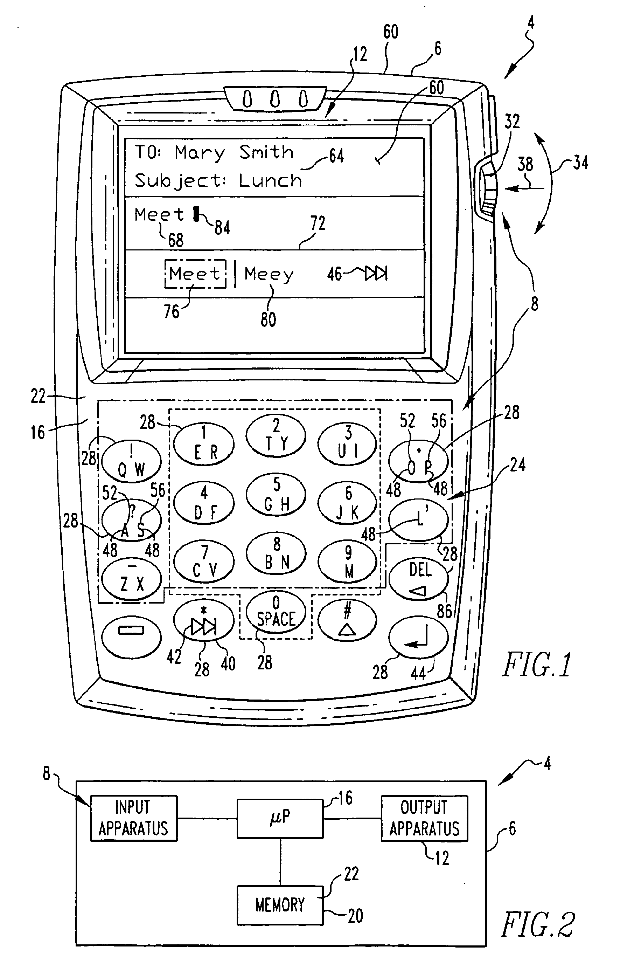

One way of providing numerous letters in a small space has been to provide a "reduced keyboard" in which multiple letters, symbols, and/or digits, and the like, are assigned to any given key. For example, a touch-tone telephone includes a reduced keyboard by providing twelve keys, of which ten have digits thereon, and of these ten keys, eight have Roman letters assigned thereto. For instance, one of the keys includes the digit "2" as well as the letters "A", "B", and "C". Since a single actuation of such a key potentially could be intended by the user to refer to any of the letters "A", "B", and "C", and potentially could also be intended to refer to the digit "2", the input (by actuation of the key) generally is an ambiguous input and is in need of some type of disambiguation in order to be useful for text entry purposes. Other known reduced keyboards have included other arrangements of keys, letters, symbols, digits, and the like. One example of a reduced keyboard is the keypad 24 forming a part of the handheld electronic device 4 shown in Figure 1 and described in greater detail herein. Keypad 24 is what is known as a reduced QWERTY keyboard.

In order to enable a user to make use of the multiple letters, digits, and the like on any given key in an ambiguous keyboard, numerous keystroke interpretation systems have been provided. For instance, a "multi-tap" system allows a user to substantially unambiguously specify a particular character on a key by pressing the same key a number of times equivalent to the position of the desired character on the key. For example, on the aforementioned telephone key that includes the letters "ABC", if the user desires to specify the letter "C", the user will press the key three times. Similarly, on the aforementioned keypad 24, if the user desires to specify the letter "C", the user will press the key that includes "CV7" once, and if the user desires to specify the letter "I", the user will press the key that includes "UI3" two times.

Another exemplary keystroke interpretation system would include key chording, of which various types exist. For instance, a particular character can be entered by pressing two keys in succession or by pressing and holding a first key while pressing a second key. Still another exemplary keystroke interpretation system would be a "press-and-hold / press-and-release" interpretation function in which a given key provides a first result if the key is pressed and immediately released, and provides a second result if the key is pressed and held for a short period of time.

Another keystroke interpretation system that has been employed is a software-based text disambiguation function. In such a system, a user typically presses keys to which one or more characters have been assigned, generally pressing each key one time for each desired letter, and the disambiguation software attempts to predict the intended input. Numerous such systems have been proposed. One example of such a system is disclosed in commonly owned United States Patent Application Publication No. US 2006/0058995 A1, entitled "Handheld Electronic Device With Text Disambiguation," the disclosure of which is incorporated herein by reference. As is known, many such systems display an output component as the user is typing (pressing keys) that includes a list of possible intended inputs (i.e., what the user intended while typing) that are generated by the disambiguation software. For example, Figure 1 shows a display 60 that may be provided by the disambiguation software system described in the aforementioned commonly owned United States Patent Application Publication No. US 2006/0058995 A1. As described in greater detail herein, Figure 1 shows an exemplary output 64 being depicted on the display 60 that includes a text component 68 and a variant component 72. The variant component 72 includes a default portion 76 and a variant portion 80. The variant component 72 represents a list of possible intended inputs as generated by the disambiguation software. A user may select one of the items listed in the variant component 72 for inclusion in the final text component 68.

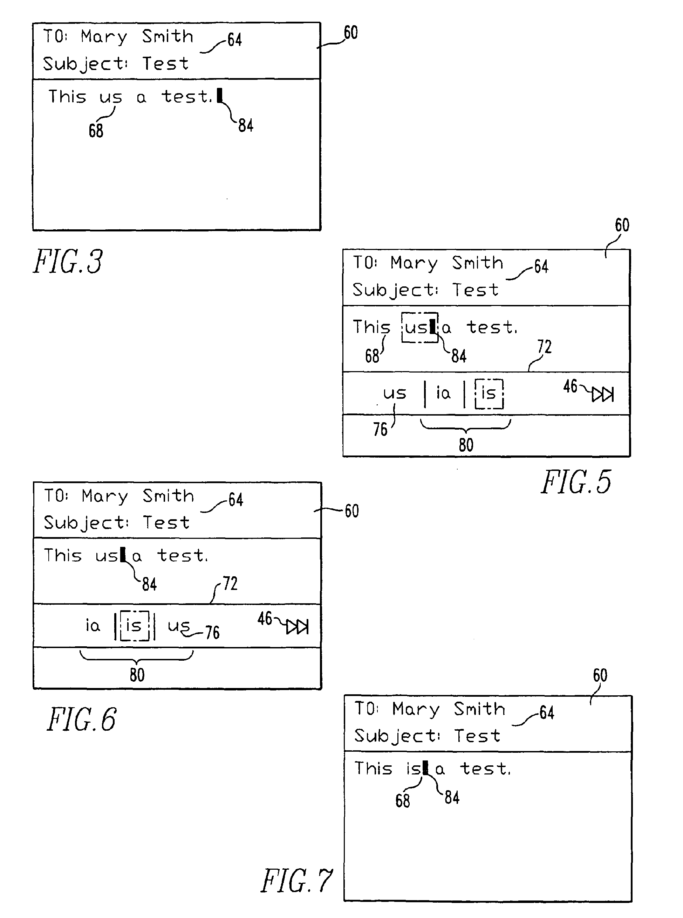

Although such text disambiguation systems are, in operation, typically quite accurate, it is unavoidable that at times an incorrect word will be inserted into the text by the disambiguation software during the entry of text. In many situations, the correct word may have been provided in the list of possible intended inputs generated by the disambiguation system, and was, for some reason, overlooked by the user. For example, as demonstrated in Figure 3, the operation of a disambiguation system in connection with a key depression sequence intended to input the text "This is a test." may result in the input of the text "This us a test." Obviously, this error will need to be corrected by a user in order for the text to make sense. One problem with current disambiguation systems is that the deletion of an incorrect word and subsequent replacement thereof with the correct word requires an undue number of keystrokes or other similar input apparatus actuations. For example, referring to Figure 3, the replacement of the word "us" with the word "is" would, with a device such as is shown in Figure 1, require the following steps: (1) returning the cursor (item 84 in Figure 3) to the end of the word "us," (2) deleting the word "us" through the use of a backspace key, (3) reentry of the word "is" using the disambiguation software (i.e., depression of the keys that include "i" and "s"), and (4) selection of the word "is" from the displayed output component that lists the possible intended inputs as determined by the disambiguation software. This sequence may require as many as six or more keystrokes and/or other input apparatus actuations and, as a result, is time consuming and inconvenient to the user.

Thus, a method is needed for electronic devices that employ text disambiguation software that simplifies and shortens the procedure required to replace an incorrect word generated by the disambiguation software.

WO-A-98331 11 discloses a reduced keyboard disambiguation system wherein editing is performed by a user selecting a word and the word selection list from which that word was entered being recreated by reconstructing the most efficient key sequence that would produce that word.

An improved handheld electronic device and an associated method provide simplified replacement of an incorrect word generated by text disambiguation software with a correct word. The number of keystrokes or other input apparatus actuations is reduced, thereby saving time and avoiding frustration.

These and other aspects of the invention are provided by a method of replacing a first word in a text component displayed by an electronic device, such as a handheld electronic device, that employs a text disambiguation function, wherein the first word resulted from a key depression sequence previously input into the electronic device. The text disambiguation function caused the electronic device to display a list of proposed words based on the key depression sequence when the key depression sequence was input into the electronic device. The method includes receiving an identification of the first word in the text component, such as by placing a cursor in proximity to the first word; responsive to the identification, determining whether the list of proposed words was stored in a memory by the electronic device; if it has been determined that said list was stored in the memory, displaying the list of proposed words that is stored in the memory on the electronic device, in an order wherein the first word (the word being replaced) appears at the end of the list of proposed words; receiving an indication of a selected one of the proposed words, and replacing the first word with the selected one of the proposed words in the text component.

The method may further include changing the appearance of the first word following the receipt of the identification of the first word to distinguish the first word from the other words in the text component. In one embodiment, the method further includes determining whether a trigger has been activated, wherein the list of proposed words is displayed only if the trigger is determined to have been activated. The trigger may be a depression of one or more keys or a cursor being placed in proximity to the first word in the text component for at least a predetermined amount of time.

The invention also relates to a handheld electronic device that includes a keyboard having a plurality of keys, a display, a processor, and a memory. The display displays a current text component having a plurality of words. Also, the memory stores a plurality of routines executable by the processor. A first one or more of the routines implements a text disambiguation function, wherein the text disambiguation function previously caused the display to display a list of proposed words based on a depression of a plurality of the keys. A second one or more of the routines is adapted to receive an identification of a first one of the plurality of words, determine whether the list of proposed words was stored in a memory by the electronic device; cause the display to display the previously generated list of proposed words, in an order wherein said first one of said plurality of words appears at the end of said list of proposed words, if it has been determined that said list was stored in the memory; receive an indication of a selected one of the proposed words, and replace the first one of the plurality of words with the selected one of the proposed words in the text component.

A full understanding of the invention can be gained from the following Description of the Preferred Embodiments when read in conjunction with the accompanying drawings in which:
Figure 1 is a front view of an improved handheld electronic device in accordance with the invention;
Figure 2 is a block diagram of the handheld electronic device of Figure 1;
Figures 3, 5, 6 and 7 are exemplary outputs provided on a display of the handheld electronic device of Figure 1; and
Figure 4 is a flowchart showing a routine for automatically replacing a word in an output provided on a display of the handheld electronic device of Figure 1 according to the invention.

Similar numerals refer to similar parts throughout the specification.

An improved handheld electronic device 4 is indicated generally in Figure 1 and is depicted schematically in Figure 2. The exemplary handheld electronic device 4 includes a housing 6 upon which are disposed a processor unit that includes an input apparatus 8, an output apparatus 12, a processor 16, and a memory 20. The processor 16 may be, for instance, and without limitation, a microprocessor (µP) and is responsive to inputs from the input apparatus 8 and provides output signals to the output apparatus 12. The processor 16 also interfaces with the memory 20. Examples of handheld electronic devices are included in U.S. Patent Nos. 6,452,588 and 6,489,950.

As can be understood from Figure 1, the input apparatus 8 includes a keypad 24 and a thumbwheel 32. The keypad 24 is in the exemplary form of a reduced QWERTY keyboard including a plurality of keys 28 that serve as input members. It is noted, however, that the keypad 24 may be of other reduced configurations, such as a reduced AZERTY keyboard, a reduced QWERTZ keyboard, or other keyboard arrangement, whether presently known or unknown. In this regard, the expression "reduced" and variations thereof, in the context of a keyboard, such as a keypad or other arrangement of input members, shall refer broadly to an arrangement in which at least one of the input members has assigned thereto a plurality of characters within a given set, such as a plurality of letters, for example, in the set of Roman letters, for example, thereby rendering ambiguous an intended result of an actuation of the at least one of the input members. In addition, as used herein, the expression "key" and variations thereof shall refer broadly to any of a variety of input members such as buttons, switches, and the like without limitation.

In this regard, and as will be set forth below in greater detail, the system architecture of the handheld electronic device 4 advantageously is organized to be operable independent of the specific layout of the keypad 24. Accordingly, the system architecture of the handheld electronic device 4 can be employed in conjunction with virtually any keyboard layout substantially without requiring any meaningful change in the system architecture.

The keys 28 are disposed on a front face of the housing 6, and the thumbwheel 32 is disposed at a side of the housing 6. The thumbwheel 32 can serve as another input member and is both rotatable, as is indicated by the arrow 34, to provide selection inputs to the processor 16, and also can be pressed in a direction generally toward the housing 6, as is indicated by the arrow 38, to provide another selection input to the processor 16.

Among the keys 28 of the keypad 24 are a <NEXT> key 40 and an <ENTER> key 44. The <NEXT> key 40 can be pressed to provide a selection input to the processor 16 and provides substantially the same selection input as is provided by a rotational input of the thumbwheel 32. Since the <NEXT> key 40 is provided adjacent a number of the other keys 28 of the keypad 24, the user can provide a selection input to the processor 16 substantially without moving the user's hands away from the keypad 24 during a text entry operation. As seen in Figure 1, the <NEXT> key 40 additionally and advantageously includes a graphic 42 disposed thereon, and in certain circumstances the output apparatus 12 also displays a displayed graphic 46 thereon to identify the <NEXT> key 40 as being able to provide a selection input to the processor 16. In this regard, the displayed graphic 46 of the output apparatus 12 is substantially similar to the graphic 42 on the <NEXT> key and thus identifies the <NEXT> key 40 as being capable of providing a desirable selection input to the processor 16.

As can further be seen in Figure 1, many of the keys 28 include a number of characters 48 disposed thereon. As employed herein, the expression "a number of" and variations thereof shall refer broadly to any quantity, including a quantity of one, and in certain circumstances herein can also refer to a quantity of zero. In the exemplary depiction of the keypad 24, many of the keys 28 include two or more characters, such as including a first character 52 and a second character 56 assigned thereto. It is understood that the expression "characters" shall broadly be construed to include letters, digits, symbols and the like and can additionally include ideographic characters, components thereof, other linguistic elements, and the like. The keys 28 having one or more characters 48 or other linguistic elements can be considered to be linguistic input members.

One of the keys 28 of the keypad 24 includes as the characters 48 thereof the letters "Q" and "W", and an adjacent key 28 includes as the characters 48 thereof the letters "E" and "R". It can be seen that the arrangement of the characters 48 on the keys 28 of the keypad 24 is generally of a QWERTY arrangement, albeit with many of the keys 28 including two of the characters 48.

The memory 20 is depicted schematically in Figure 2. The memory 20 can be any of a variety of types of internal and/or external storage media such as, without limitation, RAM, ROM, EPROM(s), EEPROM(s), and the like that provide a storage register for data storage such as in the fashion of an internal storage area of a computer, and can be volatile memory or nonvolatile memory. The memory 20 additionally includes a number of routines depicted generally with the numeral 22 for the processing of data. The routines 22, executable by the processor 16, can be in any of a variety of forms such as, without limitation, software, firmware, and the like. The routines 22 include a software-based text disambiguation function as described elsewhere herein as an application, as well as other routines. In the preferred embodiment, the software-based text disambiguation function is as described in commonly owned United States Patent Application Serial No. 10/931,281, entitled "Handheld Electronic Device With Text Disambiguation," the disclosure of which is incorporated herein by reference. In addition, the routines 22 also include a non-predictive keystroke interpretation system, such as a "multi-tap" system, that allows a user to substantially unambiguously specify a particular character 48 on a particular key 28 by pressing the same key 28 a number of times equivalent to the position of the desired character 48 on the key 28.

The output apparatus 12 includes a display 60 upon which can be provided an output 64 according to the preferred embodiment of the invention. An exemplary output 64 is depicted on the display 60 in Fig. 1. The output 64 includes a text component 68 and a variant component 72. The variant component 72 includes a default portion 76 and a variant portion 80. The display also includes a cursor 84 that depicts generally where the next input from the input apparatus 8 will be received.

The text component 68 of the output 64 provides a depiction of the default portion 76 of the output 64 at a location on the display 60 where the text is being input. The variant component 72 is disposed generally in the vicinity of the text component 68 and provides, in addition to the default proposed output 76, a depiction of the various alternate text choices, i.e., alternates to the default proposed output 76, that are proposed by the text disambiguation function in response to an input sequence of key actuations of the keys 28.

As described in detail in commonly owned United States Patent Application Publication No. US 2006/0058995 A1, entitled "Handheld Electronic Device With Text Disambiguation," the default portion 76 is proposed by the text disambiguation function as being the most likely disambiguated interpretation of the ambiguous input provided by the user. The variant portion 80 includes a predetermined quantity of alternate proposed interpretations of the same ambiguous input from which the user can select, if desired. The displayed graphic 46 typically is provided in the variant component 72 in the vicinity of the variant portion 80, although it is understood that the displayed graphic 46 could be provided in other locations and in other fashions without departing from the concept of the invention. It is also noted that the exemplary variant component 72 is depicted herein as extending in a horizontal fashion at a position below the then text component 68, but it is understood that numerous other arrangements could be provided without departing from the concept and scope of the invention.

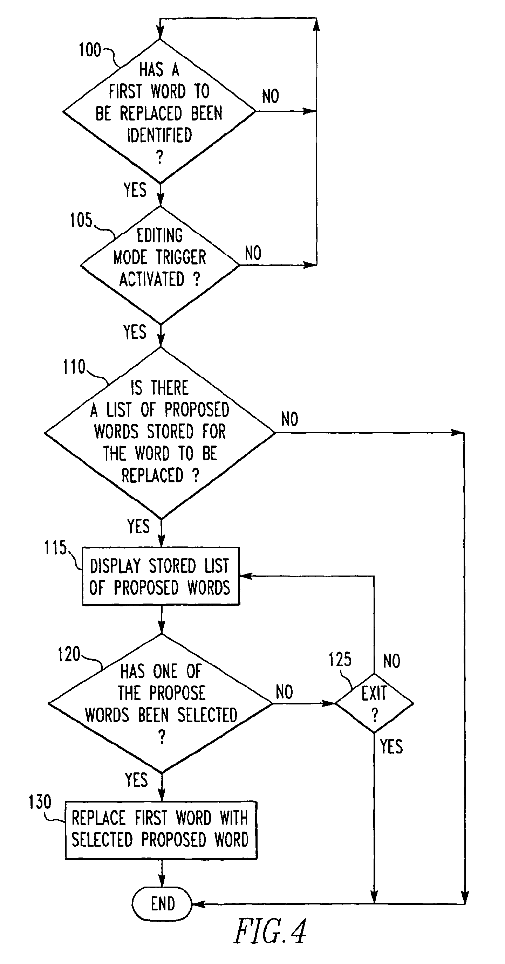

According to an aspect of the invention, handheld electronic device 4 includes a routine 22, stored in memory 20 and executable by processor 16, for simplifying and expediting the procedure for replacing a word forming part of a text component such as text component 68 generated by the text disambiguation function of handheld electronic device 4 that is determined by a user to be incorrect with an alternate, correct word. This routine may be used, for example, to correct the error present in Figure 3 as described above (to replace "us" with "is"). A flowchart depicting one embodiment of such a routine is shown in Figure 4.

The routine begins at step 100, where a determination is made as to whether a first word, which, according to the invention, is a word that the user of handheld electronic device 4 has determined to be incorrect and that the user wishes to replace with an alternate, correct word, has been identified. In the preferred embodiment, the first word is identified by the user by causing the cursor 84 to be placed in a location proximate to (e.g., next to or on top of) a character of the word as shown in Figure 5. As is known, curser 84 may be selectively moved on display 60 using the input apparatus 8 and the navigational functions of handheld electronic device 4.

If the answer at step 100 is no, then the routine returns to step 100, where it waits for a first word (to be replaced) to be identified. If the answer at step 100 is yes, then, at step 105, a determination is made as to whether a trigger for handheld electronic device 4 to enter an editing mode (as opposed to a navigational mode) has been activated. For example, such a trigger may be the passage of a predetermined amount of time that the first word remains identified (step 100), or may be the depression of one or more keys 28 (or a special, dedicated key) in a predetermined manner, sequence or combination. In one embodiment, shown in Figure 5, once the trigger is activated, the identified first word is distinguished from the other words in text component 68, such as by highlighting or otherwise changing the appearance of the word (e.g., making it bold or changing its color). If the answer at step 105 is no, then the routine returns to step 100. However, if the answer at step 105 is yes, then, at step 110, a determination is made as to whether a list of proposed words that was previously generated by the text disambiguation function of handheld electronic device 4 when the first word was input is stored by handheld electronic device 4, such as in memory 20. In the preferred embodiment, that list will be the variant component 72 that was generated and displayed on display 60 when the first word was input by the user.

If the answer at step 110 is no, then the routine ends, as there is no list of words available for use in replacing the first word according to the invention, and, as a result, the user must replace the first word with the correct word manually. If the answer at step 110 is yes, then, at step 115, the stored list of proposed words is displayed to the user, preferably in the form of variant component 72 provided on the display 60 as shown in Figure 5. As seen in Figure 5, variant component 72 is, in one embodiment, provided in the manner is which it was originally provided when the first word was being input, with default portion 76 (including the word "us") being listed first. In an alternate embodiment, the variant component 72 is provided on the display 60 in the manner shown in Figure 6, wherein the original default portion 76 (including the word "us") is moved to the end of the listing (since it is incorrect and therefore should not be selected by the user). Next, at step 120, a determination is made as to whether one of the listed proposed words from step 115 has been selected, such as through the use of input apparatus 8. As seen in Figure 5, the selected word is preferably distinguished form the other listed words, such as by highlighting or otherwise changing the appearance of the word (e.g., making it bold or changing its color). If the answer is no, then, at step 125, the routine determines whether a request to exit the routine has been made (e.g., the user no longer desires to replace the first word, or the desired word is not present on the displayed list). If an exit request has been received, the routine ends, and if an exit request has not been received, the routine returns to step 115 to continue displaying the list of proposed words. If the answer at step 120 is yes, meaning that one of the listed proposed words has been selected, then, at step 130, the first word identified in step 100 is automatically replaced in text component 68 with the selected proposed word as demonstrated in Figure 7.

While specific embodiments of the invention have been described in detail, it will be appreciated by those skilled in the art that various modifications and alternatives to those details could be developed in light of the overall teachings of the disclosure. For example, while the invention has been described in connection with the a handheld electronic device that employs a text disambiguation function, it will be appreciated that the invention may also be utilized in connection with other types of electronic devices that employ a text disambiguation function, such as a personal computer or the like. Accordingly, the particular arrangements disclosed are meant to be illustrative only and not limiting as to the scope of the invention which is to be given the full breadth of the claims appended.

## Claims

1. A method of replacing a first word in a text component displayed by a handheld electronic device, said first word having resulted from a key (28) depression sequence previously input into said electronic device, said electronic device having a text disambiguation function, said text disambiguation function having caused said electronic device to display a list of proposed words based on said key (28) depression sequence when said key (28) depression sequence was input into said electronic device, the method comprising:
receiving an identification of said first word in said text component;
responsive to said receiving an identification step, determining (110) whether said list of proposed words was stored in a memory (20) by said electronic device;
if it has been determined that said list was stored in the memory displaying (115) said list of proposed words that is stored in said memory (20) on said electronic device, in an order wherein said first word appears at the end of said list of proposed words;
receiving an indication (120) of a selected one of said proposed words; and;
replacing (130) said first word with said selected one of said proposed words in said text component.

2. The method according to claim 1, said text component comprising a one or more other words, said method further comprising changing the appearance of said first word following said step of receiving an identification of said first word to distinguish said first word from said one or more other words.

3. The method according to claim 1, wherein when said list of proposed words was displayed when said key (28) depression sequence was input into said electronic device, said proposed words appeared in a second order wherein said first word appeared at a beginning of said list of proposed words.

4. The method according to claim 1, wherein said indication comprises a placement of a cursor (84) in proximity to said first word in said text component.

5. The method according to claim 4, further comprising determining whether said cursor (84) remains in proximity to said first word for at least a predetermined amount of time, wherein said step of displaying (115) said list of proposed words on said electronic device further comprises displaying said list of proposed words only if said cursor is determined to have remained in proximity to said first word for said at least a predetermined amount of time.

6. The method according to claim 1, further comprising determining (105) whether a trigger has been activated, wherein said step of displaying (115) said list of proposed words on said electronic device further comprises displaying said list of proposed words only if said trigger is determined to have been activated.

7. The method according to claim 6, said trigger comprising a depression of one or more keys of said electronic device.

8. The method according to claim claim 6 said trigger comprising a cursor being placed in proximity to said first word in said text component for at least a predetermined amount of time.

9. A handheld electronic device (4), comprising:
a reduced keyboard (24) having a plurality of keys (28);
a display, said display (60) currently displaying a text component having a plurality of words;
a processor (16); and
a memory (20) storing a plurality of routines (22) executable by said processor, a first one or more of said routines (22) implementing a text disambiguation function, said text disambiguation function having previously caused said display to display a list of proposed words based on a depression of a plurality of said keys, wherein a second one or more of said routines (22) is adapted to:
receive an identification of a first one of said plurality of words;
determine whether said list of proposed words was stored in a memory by said electronic device;
cause said display to display said list of proposed words that is stored in said memory on said electrical device, in an order wherein said first one of said plurality of words appears at the end of said list of proposed words, if it has been determined that said list was stored in the memory;
receive an indication of a selected one of said proposed words; and
replace said first one of said plurality of words with said selected one of said proposed words in said text component.

10. The handheld electronic device (4) according to claim 9, said second one or more of said routines (22) being further adapted to change the appearance of said first one of said plurality of words following receipt of said identification of said first one of said plurality of words to distinguish said first one of said plurality of words from the remaining ones of said plurality of words.

11. The handheld electronic device (4) according to claim 9, wherein when said list of proposed words was displayed based on said depression of a plurality of said keys (28), said proposed words appeared in a second order wherein said first one of said plurality of words appeared at a beginning of said list of proposed words.

12. The handheld electronic device (4) according to claim 9, wherein said indication comprises a placement of a cursor (84) in proximity to said first one of said plurality of words in said text component.

13. The handheld electronic device (4) according to claim 12, said second one or more routines being further adapted to determine whether said cursor (84) remains in proximity to said first one of said plurality of words for at least a predetermined amount of time, and to cause said display to display said list of proposed words only if said cursor is determined to have remained in proximity to said first one of said plurality of words for said at least a predetermined amount of time.

14. The handheld electronic device (4) according to claim 9, said second one or more routines (22) being further adapted to determine whether a trigger has been activated, and to cause said display to display said list of proposed words only if said trigger is determined to have been activated.

15. The handheld electronic device (4) according to claim 14, said trigger comprising a depression of one or more of said key keys (28).

16. The handheld electronic device (4) according to claim 14, said trigger comprising a cursor (84) being placed in proximity to said first one of said plurality of words in said text component for at least a predetermined amount of time.

## Patentansprüche

1. Verfahren zum Ersetzen eines ersten Wortes in einer Textkomponente die durch eine tragbare elektronische Vorrichtung angezeigt wird, wobei das erste Wort aus einer Tasten(28)drucksequenz resultiert, die vorher in die elektronische Vorrichtung eingegeben wurde, wobei die elektronische Vorrichtung eine Textdisambiguierungsfunktion hat, wobei die Textdisambiguierungsfunktion die elektronische Vorrichtung veranlasst, eine Liste von vorgeschlagenen Wörtern basierend auf der Tasten(28)drucksequenz anzuzeigen, wenn die Tasten(28)drucksequenz in die elektronische Vorrichtung eingegeben wird, wobei das Verfahren aufweist:
Empfangen einer Identifikation des ersten Worts in der Textkomponente:
als Reaktion auf den Empfang eines Identifikationsschrittes, Bestimmen (110), ob die Liste von vorgeschlagenen Wörtern durch die elektronische Vorrichtung in einem Speicher (20) gespeichert ist:
wenn bestimmt wird, dass die Liste in dem Speicher gespeichert ist, Anzeigen (115) der Liste von vorgeschlagenen Wörtern, die in dem Speicher (20) gespeichert ist, auf der elektronischen Vorrichtung, in einer Reihenfolge, in der das erste Wort am Ende der Liste von vorgeschlagenen Wörtern erscheint;
Empfangen einer Anzeige (120) eines ausgewählten der vorgeschlagenen Wörter; und
Ersetzen (130) des ersten Wortes mit dem ausgewählten der vorgeschlagenen Wörter in der Textkomponente.

2. Verfahren gemäß Anspruch 1, wobei die Textkomponente ein oder mehrere Wörter aufweist, wobei das Verfahren weiter aufweist ein Ändern der Erscheinung des ersten Wortes nach dem Schritt des Empfangens einer Identifikation des ersten Wortes, um das erste Wort von dem einen oder mehreren anderen Wörtern zu unterscheiden.

3. Verfahren gemäß Anspruch 1, wobei die Liste von vorgeschlagenen Wörtern angezeigt wird, wenn die Tasten(28)drucksequenz in die elektronische Vorrichtung eingegeben wird, wobei die vorgeschlagenen Wörter in einer zweiten Reihenfolge erscheinen, in der das erste Wort an einem Anfang der Liste von vorgeschlagenen Wörtern erscheint.

4. Verfahren gemäß Anspruch 1, wobei die Anzeige eine Platzierung eines Cursors (84) in der Nähe des ersten Wortes in der Textkomponente aufweist.

5. Verfahren gemäß Anspruch 4, das weiter aufweist ein Bestimmen, ob der Cursor (84) in der Nähe des ersten Wortes für zumindest eine vorgegebene Zeitdauer bleibt, wobei der Schritt des Anzeigens (115) der Liste von vorgeschlagenen Wörtern auf der elektronischen Vorrichtung weiter aufweist ein Anzeigen der Liste von vorgeschlagenen Wörtern nur, wenn bestimmt wird, dass der Cursor in der Nähe des ersten Wortes für zumindest die vorgegebene Zeitdauer geblieben ist.

6. Verfahren gemäß Anspruch 1, das weiter aufweist ein Bestimmen (105), ob ein Auslöser aktiviert wurde, wobei der Schritt des Anzeigens (115) der Liste von vorgeschlagenen Wörtern auf der elektronischen Vorrichtung weiter aufweist ein Anzeigen der Liste von vorgeschlagenen Wörtern nur, wenn bestimmt wird, dass der Auslöser aktiviert wurde.

7. Verfahren gemäß Anspruch 6, wobei der Auslöser ein Drücken einer oder mehrerer Tasten der elektronischen Vorrichtung aufweist.

8. Verfahren gemäß Anspruch 6, wobei der Auslöser einen Cursor aufweist, der in der Nähe des ersten Wortes in der Textkomponente für zumindest eine vorgegebene Zeitdauer platziert ist.

9. Tragbare elektronische Vorrichtung (4), die aufweist:
eine reduzierte Tastatur (24) mit einer Vielzahl von Tasten (28);
eine Anzeige, wobei die Anzeige (60) momentan eine Textkomponente mit einer Vielzahl von Wörtern aufweist;
einen Prozessor (16); und
einen Speicher (20) zum Speichern einer Vielzahl von Routinen (22), die durch den Prozessor ausführbar sind, wobei eine erste oder mehrere der Routinen (22) eine Textdisambiguierungsfunktion implementierten, wobei die Textdisambiguierungsfunktion vorher veranlasst hat, dass die Anzeige eine Liste von vorgeschlagenen Wörtern basierend auf einem Drücken einer Vielzahl der Tasten anzeigt, wobei eine zweite oder mehrere der Routinen (22) ausgebildet ist/sind:
eine Identifikation eines ersten der Vielzahl von Wörtern zu empfangen;
zu bestimmen, ob die Liste von vorgeschlagenen Wörtern durch die elektronische Vorrichtung in einem Speicher gespeichert ist;
zu veranlassen, dass die Anzeige der Liste von vorgeschlagenen Wörtern, die in dem Speicher auf der elektronischen Vorrichtung gespeichert ist, in einer Reihenfolge angezeigt wird, in der das erste der Vielzahl von Wörtern am Ende der Liste von vorgeschlagenen Wörtern erscheint, wenn bestimmt wird, dass die Liste in dem Speicher gespeichert ist;
eine Anzeige eines ausgewählten der vorgeschlagenen Wörter zu empfangen; und
das erste der Vielzahl von Wörtern mit dem ausgewählten der vorgeschlagenen Wörter in der Textkomponente zu ersetzen.

10. Tragbare elektronische Vorrichtung (4) gemäß Anspruch 9, wobei die zweite oder mehrere der Routinen (22) weiter ausgebildet ist/sind, das Erscheinung des ersten der Vielzahl von Wörtern nach dem Empfang der Identifikation des ersten der Vielzahl von Wörtern zu ändern, um das erste der Vielzahl von Wörtern von den verbleibenden der Vielzahl von Wörtern zu unterscheiden.

11. Tragbare elektronische Vorrichtung (4) gemäß Anspruch 9, wobei, wenn die Liste von vorgeschlagenen Wörtern basierend auf dem Drücken einer Vielzahl von Tasten (28) angezeigt wird, die vorgeschlagenen Wörter in einer zweiten Reihenfolge erscheinen, in der das erste der Vielzahl von Wörtern an einem Anfang der Liste von vorgeschlagenen Wörtern erscheint.

12. Tragbare elektronische Vorrichtung (4) gemäß Anspruch 9, wobei die Anzeige eine Platzierung eines Cursors (84) in der Nähe des ersten der Vielzahl von Wörtern in der Textkomponente aufweist.

13. Tragbare elektronische Vorrichtung (4) gemäß Anspruch 12. wobei die zweite oder mehrere Routinen weiter ausgebildet ist/sind, zu bestimmen, ob der Cursor (84) in der Nähe des ersten der Vielzahl von Wörtern für zumindest eine vorgegebene Zeitdauer bleibt, und zu veranlassen, dass die Anzeige die Liste von vorgeschlagenen Wörtern nur anzeigt, wenn bestimmt wird, dass der Cursor in der Nähe des ersten der Vielzahl von Wörtern für zumindest eine vorgegebene Zeitdauer geblieben ist.

14. Tragbare elektronische Vorrichtung (4) gemäß Anspruch 9, wobei die zweite oder mehrere Routinen weiter ausgebildet ist/sind, zu bestimmen, ob ein Auslöser aktiviert wurde, und zu veranlassen, dass die Anzeige die Liste von vorgeschlagenen Wörtern nur anzeigt, wenn bestimmt wird, dass der Auslöser aktiviert wurde.

15. Tragbare elektronische Vorrichtung (4) gemäß Anspruch 14. wobei der Auslöser ein Drücken einer oder mehrerer Tasten (28) aufweist.

16. Tragbare elektronische Vorrichtung (4) gemäß Anspruch 14, wobei der Auslöser einen Cursor (84) aufweist, der in der Nähe des ersten der Vielzahl von Wörtern in der Textkomponente für zumindest eine vorgegebene Zeitdauer platziert ist.

## Revendications

1. Procédé de remplacement d'un premier mot dans une composante de texte affichée par un dispositif électronique portatif, ledit premier mot résultant d'une séquence de frappes de touches (28) précédemment opérée sur ledit dispositif électronique, ledit dispositif électronique possédant une fonction de désambiguïsation de texte, ladite fonction de désambiguïsation de texte ayant commandé audit dispositif électronique d'afficher une liste de mots proposés sur la base de ladite séquence de frappes de touches (28), lorsque ladite séquence de frappes de touches (28) a été opérée sur ledit dispositif électronique, le procédé comprenant les étapes consistant à :
recevoir une identification dudit premier mot dans ladite composante de texte ;
en réponse à ladite étape de réception d'une identification, déterminer (110) si ladite liste de mots proposés a été stockée dans une mémoire (20) par ledit dispositif électronique ;
s'il a été déterminé que ladite liste était stockée dans la mémoire, afficher (115) ladite liste de mots proposés qui est stockée dans ladite mémoire (20) sur ledit dispositif électronique, dans un ordre dans lequel ledit premier mot apparaît à la fin de ladite liste de mots proposés ;
recevoir une indication (120) d'un mot sélectionné parmi lesdits mots proposés ; et
remplacer (130) ledit premier mot dans ladite composante de texte par ledit mot sélectionné parmi lesdits mots proposés.

2. Procédé selon la revendication 1, dans lequel ladite composante de texte comprend un ou plusieurs autres mots, ledit procédé comprenant en outre l'étape consistant à modifier l'apparence dudit premier mot après ladite étape de réception d'une identification dudit premier mot, afin de distinguer ledit premier mot desdits un ou plusieurs autres mots.

3. Procédé selon la revendication 1, dans lequel, lorsque ladite liste de mots proposés a été affichée après que ladite séquence de frappes de touches (28) a été opérée sur ledit dispositif électronique, lesdits mots proposés apparaissent dans un second ordre, dans lequel ledit premier mot apparaît au début de ladite liste de mots proposés.

4. Procédé selon la revendication 1, dans lequel ladite indication comprend le placement d'un curseur (84) à proximité dudit premier mot dans ladite composante de texte.

5. Procédé selon la revendication 4, comprenant en outre l'étape consistant à déterminer si ledit curseur (84) reste à proximité dudit premier mot pendant au moins une durée prédéterminée de temps, ladite étape d'affichage (115) de ladite liste de mots proposés sur ledit dispositif électronique comprenant en outre l'étape consistant à n'afficher ladite liste de mots proposés que s'il a été déterminé que ledit curseur est resté à proximité dudit premier mot pendant au moins une durée prédéterminée de temps.

6. Procédé selon la revendication 1, comprenant en outre l'étape consistant à déterminer (105) si un déclenchement a été opéré, ladite étape d'affichage (115) de ladite liste de mots proposés sur ledit dispositif électronique comprenant en outre l'étape consistant à n'afficher ladite liste de mots proposés que s'il a été déterminé que ledit déclenchement a été opéré.

7. Procédé selon la revendication 6, dans lequel ledit déclenchement comprend l'actionnement d'une ou plusieurs touches dudit dispositif électronique.

8. Procédé selon la revendication 6, dans lequel ledit déclenchement comprend le placement d'un curseur à proximité dudit premier mot dans ladite composante de texte pendant au moins une durée prédéterminée de temps.

9. Dispositif électronique portatif (4) comprenant :
un clavier réduit (24) comptant une pluralité de touches (28) ;
un écran d'affichage, ledit écran d'affichage (60) affichant présentement une composante de texte comprenant une pluralité de mots ;
un processeur (16) ; et
une mémoire (20) stockant une pluralité de routines (22) exécutables par ledit processeur, une ou plusieurs premières routines, parmi lesdites routines (22), mettant en oeuvre une fonction de désambiguïsation de texte, ladite fonction de désambiguïsation de texte ayant précédemment commandé audit écran d'affichage d'afficher une liste de mots proposés sur la base de la frappe d'une pluralité desdites touches, tandis qu'une ou plusieurs secondes routines, parmi lesdites routines (22), sont conçues afin de :
recevoir une identification d'un premier mot parmi ladite pluralité de mots ;
déterminer si ladite liste de mots proposés a été stockée dans une mémoire par ledit dispositif électronique ;
commander audit écran d'affichage d'afficher ladite liste de mots proposée qui est stockée dans ladite mémoire sur ledit dispositif électrique, dans un ordre dans lequel ledit premier mot apparaît à la fin de ladite liste de mots proposés, s'il a été déterminé que ladite liste était stockée dans la mémoire ;
recevoir une indication d'un mot sélectionné parmi lesdits mots proposés ; et
remplacer ledit premier mot dans ladite composante de texte par ledit mot sélectionné parmi lesdits mots proposés.

10. Dispositif électronique portatif (4) selon la revendication 9, dans lequel lesdites une ou plusieurs secondes routines parmi lesdites routines (22) sont en outre conçues pour modifier l'apparence dudit premier mot parmi ladite pluralité de mots après réception de ladite identification dudit premier mot parmi ladite pluralité de mots, afin de distinguer ledit premier mot parmi ladite pluralité de mots, par rapport aux autres mots parmi ladite pluralité de mots.

11. Dispositif électronique portatif (4) selon la revendication 9, dans lequel, lorsque ladite liste de mots proposés a été affichée en raison dudit actionnement d'une pluralité desdites touches (28), lesdits mots proposés apparaissent dans un second ordre dans lequel ledit premier mot parmi ladite pluralité de mots apparaît au début de ladite liste de mots proposés.

12. Dispositif électronique portatif (4) selon la revendication 9, dans lequel ladite indication comprend le placement d'un curseur (84) à proximité dudit premier mot parmi ladite pluralité de mots dans ladite composante de texte.

13. Dispositif électronique portatif (4) selon la revendication 12, dans lequel lesdites une ou plusieurs secondes routines sont en outre conçues pour déterminer si ledit curseur (84) reste à proximité dudit premier mot parmi ladite pluralité de mots pendant au moins une durée prédéterminée de temps et pour commander audit écran d'affichage de n'afficher ladite liste de mots que s'il a été déterminé que ledit curseur est resté à proximité dudit premier mot parmi ladite pluralité de mots pendant au moins ladite durée prédéterminée de temps.

14. Dispositif électronique portatif (4) selon la revendication 9, dans lequel lesdites une ou plusieurs secondes routines (22) sont en outre conçues pour déterminer si un déclenchement a été opéré et pour commander audit écran d'affichage de n'afficher ladite liste de mots proposés que s'il a été déterminé que ledit déclenchement avait été opéré.

15. Dispositif électronique portatif (4) selon la revendication 14, dans lequel ledit déclenchement comprend l'actionnement d'une ou plusieurs desdites touches (28).

16. Dispositif électronique portatif (4) selon la revendication 14, dans lequel ledit déclenchement comprend le placement d'un curseur (84) à proximité dudit premier mot parmi ladite pluralité de mots dans ladite composante de texte pendant au moins une durée prédéterminée de temps.
